# DEMANDE DE BREVET EUROPEEN

(11) **EP 1 070 630 A2**
(43) Date de publication de la demande: **24.01.2001**
(21) Numéro de dépôt: 00402028.5
(22) Date de dépôt: 17.07.2000
(51) Int. Cl.: B60P 3/38

(54) **Banquette-lit pour caravanes à structure pivotante**

(30) Priorité: 19.07.1999 FR 9909354
(71) Demandeur: Rapido, 53100 Mayenne (FR)
(72) Inventeur: Rousseau, Pierre, 53100 Mayenne (FR)
(74) Mandataire: Texier, Christian

(57) **Abrégé**

L'invention concerne un ensemble constitué d'un lit permanent (100, 120) et d'une banquette escamotable pour une habitation mobile telle qu'une caravane, la banquette comprenant une assise (200) et un dossier (240), caractérisé en ce que le dossier de la banquette est rabattable par pivotement sur l'assise de la banquette, en ce qu'en position rabattue du dossier, la banquette est escamotable latéralement par pivotement et dans une position où elle découvre le lit (100, 140), en ce qu'en position non rabattue du dossier, l'assise de la banquette repose sur une extrémité du lit (100, 120).

## Description

L'invention concerne les aménagements formant à la fois banquette et lit destinés aux caravanes et autres habitations transportables.

Les ensembles banquettes/lits proposés jusqu'à présent sont souvent complexes, fragiles et coûteux de réalisation. Le besoin existe de proposer un ensemble banquette/lit qui réponde mieux aux besoins des utilisateurs et des constructeurs.

L'invention vise à répondre à ce besoin en proposant un ensemble constitué d'un lit permanent et d'une banquette escamotable pour une habitation mobile telle qu'une caravane, la banquette comprenant une assise et un dossier, caractérisé en ce que le dossier de la banquette est rabattable par pivotement sur l'assise de la banquette, en ce qu'en position rabattue du dossier, la banquette est escamotable latéralement par pivotement et dans une position où elle découvre le lit, en ce qu'en position non rabattue du dossier, l'assise de la banquette repose sur une extrémité du lit.

On exploite ainsi une partie de la surface occupée par le lit permanent en recevant l'un des sièges de la dînette. La banquette pliante, qui lorqu'elle est dressée contre la paroi peut avoir l'apparence des autres meubles de l'habitacle, vient se rabattre et reposer sur le bout du lit et permettre un vis à vis sur la dînette, tout en préservant la luminosité apportée par une grande baie.

L'objectif atteint est de gagner 50 cm environ sur la longueur totale d'un véhicule comportant lit permanent et double dînette du même côté.

D'autres caractéristiques, buts et avantages de l'invention apparaîtront à la lecture de la description détaillée qui va suivre, faite en référence aux figures annexées sur lesquelles :

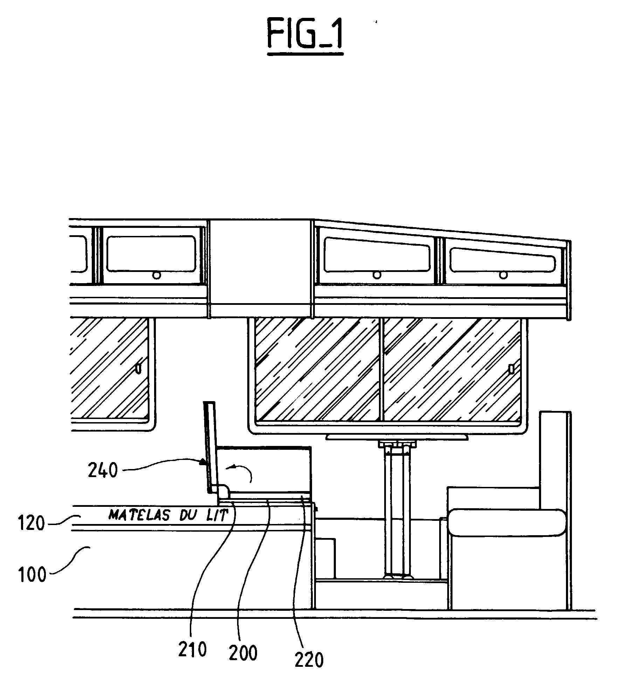

- la figure 1 représente, en vue de côté, un ensemble banquette/lit en position déployée de la banquette ;
- la figure 2 représente, en vue de derrière, le même ensemble en position intermédiaire de repliage de la banquette ;
- la figure 3 représente, en vue de côté, le même ensemble en position repliée de la banquette.

On a représenté sur les figures annexées un habitacle 100 d'une caravane qui comprend, de manière classique, un lit 100 dont le matelas s'étend jusqu'à la bordure d'une table pour déjeuner. Le lit 100 est un lit simple, à sommier et matelas fixe.

Sur la partie du matelas adjacente à la table 100 vient se positionner une assise supplémentaire escamotable 200 qui comprend un plateau inférieur en bois et un revêtement supérieur matelassé 220.

En position escamotée, cette assise est plaquée en position verticale contre un mur latéral bordant le lit. En position d'utilisation, l'assise est posée sur le matelas, sa face inférieure rigide posée sur le matelas.

L'assise est montée à pivotement entre ces deux positions par l'intermédiaire d'une charnière 300 reliant le mur latéral au lit au côté de l'assise.

Cette assise est donc basculable autour d'une de ses extrémités latérales, de sorte qu'en position escamotée, elle s'étend par sa longueur verticalement le long du mur.

En positon d'utilisation, l'assise répartit, par son plateau rigide inférieur 210, le poids d'un utilisateur sur une large surface du matelas, de sorte que le matelas ne s'enfonce que très peu.

L'assise 200 est munie d'un dossier 240 formé par exemple d'un plateau arrière en bois et d'un revêtement matelassé, rabattable sur l'assise grâce à une charnière arrière.

L'actionnement de la banquette comprend donc deux phases de rabattement ou de déploiement, respectivement celle du dossier 240 et celle de l'ensemble dossier 240/assise 200 par rapport au mur latéral.

La charnière 300 est ici montée suffisamment haute pour qu'en position verticale de la banquette, cette dernière ne dépasse au dessus du lit qu'à une hauteur ne dépassant pas sur l'espace réservé aux utilisateurs.

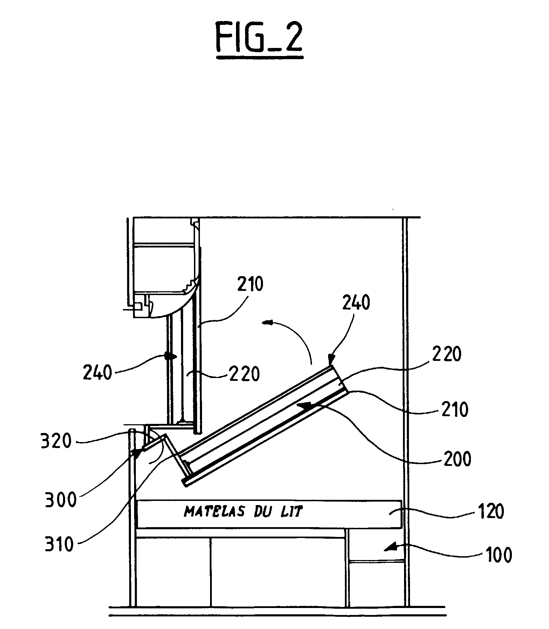

Comme on peut le voir sur la figure 2, la charnière 300 forme, en vue parallèlement à l'axe de la charnière 300 un bras rotatif autour de cette charnière qui relie la charnière 300 au plateau 210. Ce bras 310 forme dans sa partie adjacente à l'axe de rotation une portion prévue qui s'étend horizontalement en position déployée de la banquette. Cette portion 320 est avantageusement munie d'un plateau supérieur matelassé qui forme un accoudoir lorsque la banquette est dépliée.

Selon une variante non représentée, ce plateau peut être monté sur la portion 310 avec une légère liberté de pivotement pour s'écarter de cette portion lorsque la banquette est repliée, dégageant ainsi l'espace voisin de la charnière qui tend se réduire.

Avantageusement, un tel plateau pivotant est monté sur la postion 310 par une charnière parallèle à l'axe de la charnière 300 et située à l'extrémité de la portion 310 horizontale qui est la plus éloignée de la charnière 300.

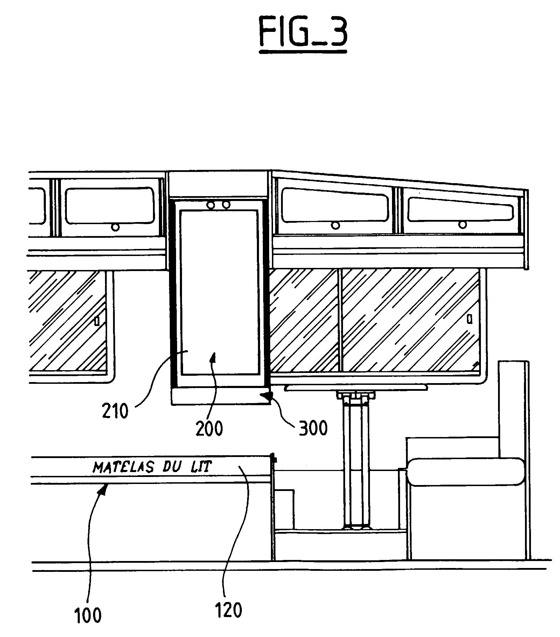

Tel qu'illustré sur la figure 3, la banquette s'étend en position repliée verticalement contre la paroi latérale du lit à la façon d'une porte d'armoire.

Un tel aménagement s'avère donc de constitution particulièrement simple, robuste, permettant notamment d'adopter un lit de type ordinaire.

Avantageusement, le bras reliant l'axe de la charnière 300 au plateau rigide 210 prolonge par une seconde portion 320, la portion 310 vers le plateau 210 selon une direction sensiblement verticale en positon déployée de la banquette. Cette position verticale est recouverte sur sa face tournée vers l'assise d'un plateau matelassé formant barrière entre le mécanisme de la charnière et la surface où l'utilisateur s'assoit, protégeant ainsi les utilisateurs d'un éventuel pincement.

## Revendications

1. Ensemble constitué d'un lit permanent (100, 120) et d'une banquette escamotable pour une habitation mobile telle qu'une caravane, la banquette comprenant une assise (200) et un dossier (240), caractérisé en ce que le dossier de la banquette est rabattable par pivotement sur l'assise de la banquette, en ce qu'en position rabattue du dossier, la banquette est escamotable latéralement par pivotement et dans une position où elle découvre le lit (100, 140), en ce qu'en position non rabattue du dossier, l'assise de la banquette repose sur une extrémité du lit (100, 120).

2. Ensemble selon la revendication 1, caractérisé en ce que l'assise (200, 240) est prévue pour être posée sur le matelas (120) du lit (100).

3. Ensemble selon la revendication 1 ou 2, caractérisé en ce que la banquette est escamotable dans une position où elle est plaquée contre un mur latéral au lit.

4. Ensemble selon l'une des revendications précédentes, caractérisé en ce que la banquette est montée à pivotement autour d'un axe longeant une extrémité de la banquette correspondant à un côté d'un utilisateur.

5. Ensemble selon l'une des revendications précédentes, caractérisé en ce que la banquette (200, 240) est montée adjacente au lit (100) par l'intermédiaire d'une charnière (300) et en ce que la charnière est munie d'un plateau supérieur formant accoudoir en position de service de la banquette (200, 240).

6. Ensemble selon l'une des revendications précédentes, caractérisé en ce que la charnière (300) forme un bras (320) rigidement solidaire de la banquette (200), qui porte un plateau prévu pivotant sur le bras entre une position d'appui sur le bras (320) dans la position déployée de l'assise (200) et une position écartée du bras (320) dans la position de repli de l'assise (200).

7. Ensemble selon l'une des revendications précédentes, caractérisé en ce que l'assise (200) comprend un plateau inférieur rigide (210).

8. Ensemble selon l'une des revendications précédentes, caractérisé en ce que le bras (320) porte un plateau qui vient, en position déployée de l'assise (200), former barrière entre la surface d'assise et les moyens formant axe de rotation (300) de la charnière.
